(19) **Europäisches Patentamt / European Patent Office / Office européen des brevets**

(11) **EP 3 779 169 B1**

(12) **EUROPEAN PATENT SPECIFICATION**

(45) Date of publication and mention
of the grant of the patent:
**19.03.2025 Bulletin 2025/12**

(21) Application number: **18914063.5**

(22) Date of filing: **12.04.2018**

(51) International Patent Classification (IPC):
**F02M 27/04** (2006.01)    **F23C 7/00** (2006.01)
**F02M 23/00** (2006.01)    **F23C 99/00** (2006.01)
**F23C 6/04** (2006.01)    **F23L 15/00** (2006.01)

(52) Cooperative Patent Classification (CPC):
**F23C 6/045; F02M 23/00; F02M 27/042;**
**F23C 99/001; F23L 15/00;** F02M 2023/008;
F02M 2027/047; F23C 2900/06041;
F23C 2900/99005; F23G 2204/201;
F23G 2204/203; Y02E 20/34; Y02T 10/12

(86) International application number:
**PCT/CN2018/082748**

(87) International publication number:
**WO 2019/196045 (17.10.2019 Gazette 2019/42)**

(54) **METHOD AND SYSTEM FOR REDUCING CONCENTRATION OF POLLUTANTS IN SMOKE GENERATED BY COMBUSTION**

VERFAHREN UND SYSTEM ZUR VERMINDERUNG DER SCHADSTOFFKONZENTRATION IN DURCH VERBRENNUNG ERZEUGTEM RAUCH

PROCÉDÉ ET SYSTÈME POUR RÉDUIRE LA CONCENTRATION EN SUBSTANCES POLLUANTES DANS UNE FUMÉE GÉNÉRÉE PAR COMBUSTION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**17.02.2021 Bulletin 2021/07**

(73) Proprietor: **Tongji University**
**Shanghai 200092 (CN)**

(72) Inventors:
• **CHEN, Dezhen**
**Shanghai 200092 (CN)**

• **HONG, Liu**
**Shanghai 200092 (CN)**

(74) Representative: **Elkington and Fife LLP**
**Prospect House**
**8 Pembroke Road**
**Sevenoaks, Kent TN13 1XR (GB)**

(56) References cited:
CH-A5- 590 405    CN-A- 102 695 870
CN-A- 106 196 038    CN-A- 106 196 038
JP-A- 2000 063 857    US-A1- 2003 031 610
US-A1- 2003 031 610    US-A1- 2004 185 396
US-A1- 2009 078 228    US-A1- 2013 323 655

## Description

### Field of the Invention

The present invention belongs to the field of energy saving and emission reduction, and particularly relates to a method and system for reducing the concentration of pollutants in smoke generated by combustion.

### Description of the Prior art

As people pay ever-increasing attention to environmental protection, the international and domestic emission standards for combustion-related pollutants are becoming increasingly strict. It has been difficult for some traditional smoke purification methods to make the concentration of pollutants in smoke meet the emission standards. On the other hand, in order to meet higher emission standards, the cost of the existing smoke purification methods and the production, operation and maintenance cost of the existing smoke purification apparatuses have also increased significantly.

In the prior art, the low-temperature plasma (Non-thermal Plasma, NTP) technology has been used to purify the tail gas generated by combustion. Low-temperature plasma is the fourth state of matter following solid, liquid and gaseous states. When the applied voltage reaches the discharge voltage of gas, the gas is broken down to generate a mixture of electrons, various ions, atoms and free radicals. Although the electron temperature is very high in the course of discharge, the temperature of heavy particles is very low and the whole system is in a low temperature state, so this state is called low-temperature plasma and also known as non-equilibrium plasma. The deacidification and denitration principles of the existing NTP technology are that high-energy electrons are generated in a plasma discharge zone to initiate the generation of free radicals such as O, OH, HOz, $O_3$ and other active elements, and the active elements oxidize $SO_2$ and NOx in smoke into high-valence substances, which are finally converted into sulfates and nitrates under the action of sprayed $NH_3$ to achieve removal.

The main features of the existing NTP denitration technology are as follows: 1) the NOx in smoke is treated, but cannot be prevented; 2) the existing NTP technology is a process for achieving denitration by an oxidation reaction of active free radicals directly with the $SO_2$ and NOx molecules in smoke, so it is necessary to enhance the energy density of a discharge zone to increase the free radical density in a reaction area to improve the removal efficiency of $SO_2$ and NOx, but when the energy density is constant, the removal efficiency of NOx and $SO_2$ decreases with an increase in their initial concentration; and 3) the existing NTP technology cannot be used in high-temperature smoke due to a reactor itself, and hence cannot increase the free radical density in the reaction area by high temperature. Therefore, the existing NTP technology has the following disadvantages: the removal efficiency of pollutants is low, and the pollutants fail to meet the standards if the technology is used alone. If a higher removal efficiency is to be achieved, especially in the presence of multiple pollutants, the power needs to be increased, which obviously increases the cost and the requirements for apparatuses. In order to improve the removal efficiency of multiple pollutants in smoke by the NTP technology, in the Chinese Invention Patent Application (CN201611174271.4), a method of dividing a conventional low-temperature plasma into multiple reactor sections is used, and synergists and accelerators are respectively added to different reaction sections, but multi-section reactors are more expensive, and the cost of synergists and accelerators is also higher. In the Chinese Invention Patent Application (CN201710269315.X), a method of oxidizing multiple pollutants in smoke by a low-temperature plasma-assisted catalyst is used to achieve the combined oxidation of multiple pollutants such as $SO_2$, NOx and $Hg^0$ in smoke, but a solid catalyst is required and its cost is high, and there is also the problem of post-treatment of the catalyst used.

Therefore, those skilled in the art are devoted to developing a method and system capable of effectively reducing the concentration of pollutants in smoke generated by combustion.

US2004/185396 A1 discloses a device that uses electrical discharges/nonthermal plasmas in a gaseous medium to activate a fuel or fuel-oxidizer mixture. CN106196038 discloses a combustion-supporting device of a coal-fired gasification furnace. US2009/078228 A1 discloses a plasma generating device for an internal combustion engine. US2003/031610 A1 discloses a device for the pre-treatment of combustion air by exposure to non-thermal plasma.

### Summary of the Invention

In view of the above defects of the prior art, a technical problem to be solved by the present invention is to provide a method and system capable of effectively reducing the concentration of pollutants in smoke generated by combustion.

In the prior art, people have noticed the characteristics of low-temperature plasma, and used the characteristics to purify the pollutants that have been produced in the tail gas generated by combustion, which is a remedial treatment. However, in the present invention, the characteristics are used to activate the combustion-supporting gas involved in a combustion reaction before or during combustion, thereby inhibiting the generation of pollutants in the combustion reaction, which is a preventive smoke pollution control technology.

Specifically, in the prior art, the process and principle of using the NTP technology to treat the tail gas generated by combustion are as follows:

the high-energy electron e generated by the discharge of a plasma reactor collides with gas molecules in smoke to generate free radicals:

$$e+O_2 \rightarrow O+O+e \qquad (1)$$

$$e+O_2 \rightarrow O+O(^1D)+e \qquad (2)$$

$$e+H_2O \rightarrow OH+H+e \qquad (3)$$

$$e+N_2 \rightarrow N + N + e \qquad (4),$$

the activated oxygen atoms then collide with the gas molecules in the smoke to generate free radicals and meanwhile the free radicals also disappear:

$$O(^1D)+H_2O \rightarrow OH+OH \qquad (5)$$

$$O(^1D)+H_2O \rightarrow O+H_2O \qquad (6)$$

$$O(^1D)+O_2 \rightarrow O+O_2 \qquad (7)$$

$$O(^1D)+N_2 \rightarrow O+N_2 \qquad (8),$$

and the remaining free radicals contact and oxidize NO and $SO_2$ in the smoke:

$$NO+(O,OH,O_3) \rightarrow NO_2,N_2O_5,... \qquad (9)$$

$$SO_2 +(O,OH,O_3) \rightarrow SO_3,... \qquad (10).$$

The products generated are high-valence nitrogen and sulfur oxides, and therefore must be neutralized with a agent, usually ammonia, to produce ammonium nitrate and ammonium sulfate. Recently, a relatively expensive agent $N_2H_4$ has been used to generate reducing H that reduces NO to $N_2$. Although high-valence nitrogen and sulfur oxides are avoided, the agent also costs much.

However, according to the present invention, when NTP or microwave is used to activate the combustion-supporting gas before a combustion reaction occurs, the reactions (1)-(8) may occur, but the reactions (9)-(10) do not occur. Moreover, the chemically active particles formed in the reactions (1)-(8) can further undergo the following reactions under the high temperature conditions of combustion to accelerate the thermochemical conversion and promote the complete combustion of fuel:

$$O_2 +e \rightarrow O_2(\alpha^1\Delta_g)+e$$

$$O_2(\alpha^1\Delta_g)+H \rightarrow O(^3P)+OH$$

$$N_2 + e \rightarrow N_2(A^3 \textstyle\sum_u^+) + e .$$

Although $N_2$ is activated and may be oxidized, due to the generation and activation of a large number of reducing molecules such as $H_2$: $H_2 + e \rightarrow H_2(a^3 \textstyle\sum_g^+) + e \quad H_2(a^3 \textstyle\sum_g^+) \rightarrow H(^1S) + H(^1S)$ , the activated H radicals have extremely high reducibility and can quickly reduce intermediate products of N.

Moreover, in the combustion process, the most effective active element is O, i.e. active O atoms, followed by other neutral atoms and active elements. It is easier for active O atoms to oxidize fuel molecules than $N_2$, which is a recognized principle in this field. Active O atoms can not only promote ignition, but also help oxidize and eliminate those intermediate products that can produce dioxins, i.e. carbon-based substances, so dioxins lose carriers and precursors for their synthesis.

In order to promote the occurrence of the reactions (3) and (5), air can be humidified or water vapor discharged as exhaust gas can be introduced before the NTP reactor and microwave pretreatment.

Based on the above principles, the present invention first provides a method for reducing the concentration of pollutants in smoke generated by combustion, which is characterized in that: combustion-supporting gas is first subjected to low-temperature plasma or microwave activation, and then supplied as secondary air to complete the combustion of a combustible material, and the secondary air is activated and supplied to the center of the flame. The pollutants are NOx and/or dioxins and/or CO. The combustible material is selected from one or more of waste, coal, biomass, oil, volatile matter and combustible gas. The combustion-supporting gas is air.

The temperature of the combustion-supporting gas is between normal temperature and 250 °C. The combustion-supporting gas may also be humidified gas. The activation is a process of introducing the combustion-supporting gas to a low-temperature plasma reactor or a microwave reactor to generate chemically active particles. The chemically active particles are free radicals such as active O atoms, H atoms, $O_3$ or OH, and $HO_2$. The low-temperature plasma reactor and/or microwave reactor is divided into one or two sections. The method further comprises a step of further purifying the smoke generated by combustion. The further purification step is a deacidification and/or dust removal step. The present invention also provides a system for reducing the concentration of pollutants in smoke generated by combustion, which is characterized by comprising a combustion-supporting gas pretreater and a combustion furnace, the combustion-supporting gas pretreater being connected to the combustion furnace through an air supply duct, wherein the combustion-supporting gas pretreater is a low-temperature plasma reactor or a microwave reactor, and is arranged at the upstream of the combustion furnace; and the combustion furnace is an incinerator, a boiler, a sintering furnace, a gasifier or a pyrolysis furnace where fuels such as coal, biomass, waste, oil, combustible gas and volatile matter are to be burnt. The system may further comprise a deacidification and/or dust removal apparatus which is located at the downstream of the combustion furnace and connected to the combustion furnace through an air supply duct. The generator mode of the low-temperature plasma reactor is corona discharge, pulsed arc discharge, glow discharge or dielectric barrier discharge.

The method and system provided by the present invention have the following beneficial effects: 1) the generation of NOx and dioxins during combustion can be inhibited, and the concentration of pollutants in smoke generated by combustion can be effectively reduced, wherein the generation of NOx is inhibited by more than 40% and the generation of dioxins is inhibited by more than 50%; 2) the low-temperature plasma reactor and/or microwave reactor does not contact corrosive components in smoke, and has no dust contamination and product accumulation, and hence is very easy to maintain and has a greatly prolonged life; 3) there is no need to add a catalyst to the low-temperature plasma reactor and/or microwave reactor or to spray ammonia after reaction; and no additional secondary pollution is caused; and 4) only an acidic gas and dust purification facility needs to be kept in a smoke cooling and purification system, and a low-temperature plasma reactor and/or a microwave reactor is additionally arranged at an air supply position to avoid any impact on a smoke waste-heat recovery process, so such arrangement is simple and feasible for the existing device.

The concept, specific structure and technical effects of the present invention will be further described below in conjunction with the drawings so as to fully understand the objects, features and effects of the present invention.

## Brief Description of the Drawings

FIG. 1 is a schematic view of one particular embodiment not according to the present invention; and

FIG. 2 is a schematic view of an embodiment according to the present invention.

## Detailed Description of the Preferred Embodiments

The present invention will be further described below with reference to the drawings and particular embodiments.

Example 1

For a waste incinerator using an existing wet purification system for purification, the concentration of acidic gas was qualified, but the concentration of NOx was 278 mg/m³, and the emission concentration of dioxins was 0.15 ng-TEQ/Nm³ and also unqualified.

By adopting the method of the present invention, all the secondary air was treated by a high voltage direct current (HVDC) pulse-type low-temperature plasma reactor and then fed into a nozzle of the secondary air, wherein the pulse discharge power was 4 J/pulse. Without changing any other settings of the system, it was found that the concentration of NOx was 167 mg/m³, and the emission concentration of dioxins was 0.07 ng-TEQ/Nm³, which met the new emission standards. The purification efficiency reached 40% and 53% respectively.

Example 2

In the smoke from a sintering furnace of an iron and steel plant, the concentration of NOx was 320 mg/m$^3$, which failed to meet the new emission standards; and dioxins had an emission concentration of 0.21 ng-TEQ/Nm$^3$, a low temperature (170-400 °C) and a high flow rate. SNCR denitrification could not be carried out, and the cost of SCR denitrification was high.

By adopting the method of the present invention, the combustion-supporting air for sintering was pretreated by a 2-stage HVDC pulse-type low-temperature plasma reactor and then fed into the sintering furnace, wherein the 2-stage pulse discharge power was 4 J/pulse. An existing smoke deacidification and dust removal system was kept. The final concentration of NOx was 190 mg/m$^3$, and the final concentration of dioxins was 0.10 ng-TEQ/Nm$^3$, which met the new emission standards. The purification efficiency reached more than 40% and 50% respectively.

Example 3

An industrial boiler for burning heavy oil was only provided with a deacidification column, in which steam atomization was used. The concentration of SO$_2$ was qualified, but the concentration of NOx was 223 mg/m$^3$, which failed to meet the local emission standards of air pollutants for boilers (GB-13271-2014) (the limit of NOx is 200 mg/m$^3$).

When the smoke was purified by the method of the present invention, an HVDC pulse low-temperature plasma reactor was mounted in front of a heavy oil burner to pretreat combustion-supporting air which was then fed into a boiler, wherein the pulse discharge power was 6 J/pulse. The final emission concentration of NOx was 130 mg/m$^3$, which met the emission requirements.

Example 4

In the above Example 3, when the smoke was purified by the method of the present invention, 15-20% of the air required for combustion was fed into a 5 KW microwave reactor for activation, and then fed into the center of the flame. The final emission concentration of NOx was 131 mg/m$^3$, which met the emission requirements.

Example 5

A biomass pellet boiler was provided with a water-film dust removal column. The concentration of acidic gas and dust was qualified, but the emission concentration of NOx was 400 mg/m$^3$ and unqualified, and the advantages of biomass boilers were also not exhibited.

When the smoke was purified by the method of the present invention, a high-voltage AC dielectric barrier discharge low-temperature plasma reactor was mounted in front of a boiler to pretreat combustion-supporting air which was then fed into the boiler, wherein the air supply rate of the boiler was 3000 m$^3$/h. The power of the high-voltage AC dielectric barrier discharge low-temperature plasma reactor was 6 KW. The final emission concentration of NOx was 230 mg/m$^3$, which met the emission requirements.

Example 6

In the above Example 5, when the smoke was purified by the method of the present invention, the air with a flow rate of 3000 m$^3$/h required for combustion was divided into two streams and fed into a combustion furnace, and the air with a flow rate of 2100 m$^3$/h was fed from a lower part of a grate as primary air; and the air with a flow rate of 900 m$^3$/h was first fed into a 5 KW microwave reactor for activation, and then fed into an upper part of the flame. The final emission concentration of NOx was 199 mg/m$^3$, which met the emission requirements.

Example 7

A waste pyrolysis gasifier was equipped with an acidic gas purification and dust removal system, in which the combustible gas generated by gasification was used for combustion. The emissions of HCl, SO$_2$ and dust were qualified. However, the concentration of O$_x$ was 301 mg/m$^3$ and the emission concentration of dioxins was 0.14 ng-TEQ/Nm$^3$.

When the smoke was purified by the method of the present invention, combustion-supporting air was pretreated by an HVDC narrow pulse low-temperature plasma reactor and then fed into a combustion furnace, wherein the pulse discharge power was 2 J/pulse. On the premise of keeping an existing smoke purification system, the final emissions of HCl, SO$_2$ and dust were still qualified. The concentration of NOx was 179 mg/m$^3$ and the emission concentration of dioxins was 0.07 ng-TEQ/Nm$^3$.

Example 8

In the above Example 7, when the smoke was purified by the method of the present invention, 20% of combustion-supporting air was pretreated by an HVDC narrow pulse low-temperature plasma reactor and then fed into a combustion furnace, wherein the pulse discharge power was 2 J/pulse. On the premise of keeping the existing smoke purification system, the final emissions of HCl, $SO_2$ and dust were still qualified. The concentration of NOx was 181 mg/m$^3$ and the emission concentration of dioxins was 0.06 ng-TEQ/Nm$^3$.

Example 9

For an industrial sludge pyrolysis furnace, the volatile matter generated by sludge pyrolysis was used for combustion, the high-temperature smoke generated by combustion was used to heat the pyrolysis furnace, and finally the smoke was cooled and discharged. A deacidification and dust removal system was arranged for the smoke, but no control steps of NOx and no control measures of dioxins were taken. The concentration of $NO_x$ in tail gas was 311 mg/m$^3$ and the emission concentration of dioxins was 0.32 ng-TEQ/Nm$^3$.

When the smoke was purified by the method of the present invention, 15% of combustion-supporting air was pretreated by an HVDC narrow pulse low-temperature plasma reactor and then fed into the flame center of a combustion furnace, wherein the pulse discharge power was 4 J/pulse. On the premise of keeping the existing smoke purification system, the final emissions of HCl, $SO_2$ and dust were still qualified. The concentration of NOx was 181 mg/m$^3$ and the emission concentration of dioxins was 0.105 ng-TEQ/Nm$^3$. Since the emission concentration of dioxins for industrial sludge pyrolysis furnaces is 0.3ng-TEQ/Nm$^3$, the emission standards have been met.

Example 10

In the above Example 9, when the smoke was purified by the method of the present invention, all the combustion-supporting air, together with all the residual odor sprayed and cooled by the water vapor generated in the sludge drying process of the system, was pretreated by a microwave reactor with a power of 10 KW and then fed into a combustion furnace. On the premise of keeping the existing smoke purification system, the final emissions of HCl, $SO_2$ and dust were still qualified. The concentration of NOx was 171 mg/m$^3$ and the emission concentration of dioxins was 0.10 ng-TEQ/Nm$^3$. Since the emission concentration of dioxins for industrial sludge pyrolysis furnaces is 0.3ng-TEQ/Nm$^3$, the emission standards have been met.

In the above Example 9, when the smoke was purified by the method of the present invention, 15% of combustion-supporting air was mixed with 15% of high-temperature smoke until the final temperature was 250 °C, and the mixture was fed into a low-temperature plasma reactor with a pulse discharge power of 4 J/pulse for treatment, and then into a combustion furnace. On the premise of keeping the existing smoke purification system, the final emissions of HCl, $SO_2$ and dust were still qualified. The concentration of NOx was 164 mg/m$^3$ and the emission concentration of dioxins was 0.007 ng-TEQ/Nm$^3$. Therefore, the emission standards have been met.

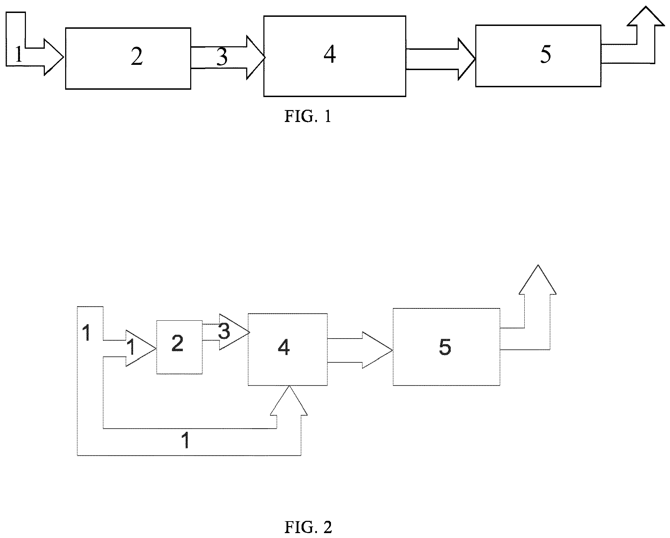

FIG. 1 shows a system for reducing the concentration of pollutants in smoke generated by combustion not according to the present invention.

Combustion-supporting air 1 first enters a low-temperature plasma reactor 2 via an air supply duct to form activated combustion-supporting air 3 which then enters a combustion furnace 4. The combustion furnace 4 is an incinerator, a boiler, a sintering furnace, a gasifier or a pyrolysis furnace where fuels such as coal, biomass, waste, oil, combustible gas and volatile matter are to be burnt. The combustion-supporting air then enters a deacidification and/or dust removal apparatus 5 for purification, and exhaust gas that meets the emission standards is finally formed and discharged into the atmosphere.

FIG. 2 shows an embodiment of the system for reducing the concentration of pollutants in smoke generated by combustion according to the present invention. 15%-30% of combustion-supporting air 1 first enters a low-temperature plasma reactor and/or a microwave reactor 2 via a secondary air duct to form activated combustion-supporting air 3 which then enters the center or/and an upper part of the flame in a combustion furnace 4. The combustion furnace 4 is an incinerator, a boiler, a sintering furnace, a gasifier or a pyrolysis furnace where fuels such as coal, biomass, waste, oil, combustible gas and volatile matter are to be burnt. The combustion-supporting air then enters a deacidification and/or dust removal apparatus 5 for purification, and exhaust gas that meets the emission standards is finally formed and discharged into the atmosphere.

In the field, low-temperature plasma refers to an activated form formed by allowing normal or negative pressure gas to be partially ionized after treatment with corona discharge, pulsed arc discharge, glow discharge or dielectric barrier discharge, etc., in which equal amounts of positive and negative ions coexist in the gas; and the microwave reactor refers to a reactor consisting of a power source (that can generally provide a high voltage of 4,000 V and above), a magnetron, a control circuit, a treatment chamber and the like, wherein the magnetron continuously generates microwaves under the excitation of the power source, and then is coupled into the treatment chamber through a waveguide system, and the normal or negative pressure air flow passes through the treatment chamber to form active gas.

In the field, the primary air refers to the air, oxygen or oxygen-containing gas in the combustion-supporting gas that is distributed to contact a combustible material for the first time and allows the combustible material to be burnt, generally accounting for 70% or more of the total amount of the combustion-supporting gas; and the secondary air refers to the air, oxygen, oxygen-containing gas or just water vapor in the combustion-supporting gas that is distributed to the center or an upper part of the flame and allows the residual combustible material in the flame to be burnt out, generally accounting for 15-30% of the combustion-supporting gas.

The preferred embodiments of the present invention have been described above in detail. It should be understood that the ordinary persons skilled in the art can make many modifications and variations within the protection scope determined by the claims.

## Claims

1. A method for reducing the concentration of pollutants in smoke generated by combustion, **characterized in that**:

    combustion-supporting gas is divided into two streams, wherein one stream is primary air, which accounts for 70% or more of total amount of the combustion-supporting gas, and another stream is secondary air, which accounts for 15%-30% of total amount of the combustion-supporting gas;
    the primary air is directly fed into a combustion furnace, and the primary air is in contact with a combustible material within the combustion furnace, wherein the combustible material is selected from one or more of waste, coal, biomass, oil, volatile matter and combustible gas;
    the secondary air is subjected to low-temperature plasma or microwave activation to generate chemically active particles, and then the activated secondary air is fed into the combustion furnace; and
    the activated secondary air is supplied into the center of the combustion flame within the combustion furnace.

2. The method for reducing the concentration of pollutants in smoke generated by combustion according to claim 1, wherein the pollutants are NOx, dioxins and/or CO.

3. The method for reducing the concentration of pollutants in smoke generated by combustion according to claim 1, wherein the combustion-supporting gas is air, oxygen-containing gas or oxygen.

4. The method for reducing the concentration of pollutants in smoke generated by combustion according to claim 1, wherein the temperature of the combustion-supporting gas is between normal temperature and 250 °C.

5. The method for reducing the concentration of pollutants in smoke generated by combustion according to claim 1, wherein the combustion-supporting gas is humidified gas.

6. The method for reducing the concentration of pollutants in smoke generated by combustion according to claim 1, wherein the low-temperature plasma activation is a process of introducing the combustion-supporting gas to a low-temperature plasma reactor or a microwave reactor to generate chemically active particles.

7. The method for reducing the concentration of pollutants in smoke generated by combustion according to claim 1, wherein the chemically active particles are selected from one or more of free radicals including active O atoms, H atoms, $O_3$, OH and $HO_2$.

8. The method for reducing the concentration of pollutants in smoke generated by combustion according to claim 6, wherein the low-temperature plasma reactor or microwave reactor is divided into one or two sections.

9. The method for reducing the concentration of pollutants in smoke generated by combustion according to claim 1, further comprising a step of further purifying the smoke generated by combustion.

10. The method for reducing the concentration of pollutants in smoke generated by combustion according to claim 9, wherein the further purification step is a deacidification and/or dust removal step.

11. A system for reducing the concentration of pollutants in smoke generated by combustion, **characterized by** comprising a combustion-supporting gas pretreater, a combustion furnace and air supply ducts,

wherein the air supply ducts comprise a first air supply duct and a second air supply duct;

wherein the first air supply duct is connected to the combustion furnace, and is arranged to feed primary air, which accounts for 70% or more of total amount of combustion-supporting gas, into the combustion furnace;
wherein the combustion-supporting gas pretreater is a low-temperature plasma reactor or a microwave reactor;
the combustion-supporting gas pretreater is arranged upstream of the combustion furnace and is connected to the combustion furnace through the second air supply duct;
wherein the combustion-supporting gas pretreater is used to activate secondary air which accounts for 15%-30% of total amount of combustion-supporting gas;
wherein the second air supply duct is arranged to feed the secondary air into a center of a flame within the combustion furnace; and
wherein the combustion furnace is an incinerator, a boiler, a sintering furnace, a gasifier or a pyrolysis furnace.

12. The system for reducing the concentration of pollutants in smoke generated by combustion according to claim 11, further comprising a deacidification and/or dust removal apparatus which is located downstream of the combustion furnace and connected to the combustion furnace through a flue.

13. The system for reducing the concentration of pollutants in smoke generated by combustion according to claim 11, wherein a generator mode of the low-temperature plasma reactor is corona discharge, pulsed arc discharge, glow discharge or dielectric barrier discharge.

**Patentansprüche**

1. Verfahren zum Vermindern der Schadstoffkonzentration in durch Verbrennung erzeugtem Rauch, **dadurch gekennzeichnet, dass**:

verbrennungsunterstützendes Gas in zwei Ströme aufgeteilt wird, wobei ein Strom Primärluft ist, die 70 % oder mehr der Gesamtmenge des verbrennungsunterstützenden Gases ausmacht, und ein anderer Strom Sekundärluft ist, die 15 %-30 % der Gesamtmenge des verbrennungsunterstützenden Gases ausmacht;
die Primärluft direkt in einen Verbrennungsofen eingespeist wird und die Primärluft mit einem brennbaren Material innerhalb des Verbrennungsofens in Kontakt steht, wobei das brennbare Material aus einem oder mehreren von Abfall, Kohle, Biomasse, Öl, flüchtigen Stoffen und brennbarem Gas ausgewählt ist;
die Sekundärluft einer Niedertemperatur-Plasma- oder Mikrowellenaktivierung unterzogen wird, um chemisch aktive Partikel zu erzeugen, und dann die aktivierte Sekundärluft in den Verbrennungsofen eingespeist wird; und
die aktivierte Sekundärluft in das Zentrum der Verbrennungsflamme innerhalb des Verbrennungsofens zugeführt wird.

2. Verfahren zum Vermindern der Schadstoffkonzentration in durch Verbrennung erzeugtem Rauch nach Anspruch 1, wobei die Schadstoffe NOx, Dioxine und/oder CO sind.

3. Verfahren zum Vermindern der Schadstoffkonzentration in durch Verbrennung erzeugtem Rauch nach Anspruch 1, wobei das verbrennungsunterstützende Gas Luft, sauerstoffhaltiges Gas oder Sauerstoff ist.

4. Verfahren zum Vermindern der Schadstoffkonzentration in durch Verbrennung erzeugtem Rauch nach Anspruch 1, wobei die Temperatur des verbrennungsunterstützenden Gases zwischen Normaltemperatur und 250 °C liegt.

5. Verfahren zum Vermindern der Schadstoffkonzentration in durch Verbrennung erzeugtem Rauch nach Anspruch 1, wobei das verbrennungsunterstützende Gas angefeuchtetes Gas ist.

6. Verfahren zum Vermindern der Schadstoffkonzentration in durch Verbrennung erzeugtem Rauch nach Anspruch 1, wobei die Niedertemperatur-Plasmaaktivierung ein Vorgang eines Einleitens des verbrennungsunterstützenden Gases in einen Niedertemperatur-Plasmareaktor oder einen Mikrowellenreaktor ist, um chemisch aktive Partikel zu erzeugen.

7. Verfahren zum Vermindern der Schadstoffkonzentration in durch Verbrennung erzeugtem Rauch nach Anspruch 1, wobei die chemisch aktiven Partikel aus einem oder mehreren von freien Radikalen ausgewählt sind, die aktive O-

Atome, H-Atome, $O_3$, OH und $HO_2$ enthalten.

8. Verfahren zum Vermindern der Schadstoffkonzentration in durch Verbrennung erzeugtem Rauch nach Anspruch 6, wobei der Niedertemperatur-Plasmareaktor oder Mikrowellenreaktor in einen oder zwei Abschnitte unterteilt ist.

9. Verfahren zum Vermindern der Schadstoffkonzentration in durch Verbrennung erzeugtem Rauch nach Anspruch 1, ferner umfassend einen Schritt eines weiteren Reinigens des durch Verbrennung erzeugten Rauchs.

10. Verfahren zum Vermindern der Schadstoffkonzentration in durch Verbrennung erzeugtem Rauch nach Anspruch 9, wobei der weitere Reinigungsschritt ein Entsäuerungs- und/oder Entstaubungsschritt ist.

11. System zum Vermindern der Schadstoffkonzentration in durch Verbrennung erzeugtem Rauch, **dadurch gekennzeichnet, dass** es einen Vorbehandler für verbrennungsunterstützendes Gas, einen Verbrennungsofen und Luftzufuhrkanäle umfasst,

> wobei die Luftzufuhrkanäle einen ersten Luftzufuhrkanal und einen zweiten Luftzufuhrkanal umfassen;
> wobei der erste Luftzufuhrkanal mit dem Verbrennungsofen verbunden ist und angeordnet ist, um Primärluft, die 70 % oder mehr der Gesamtmenge des verbrennungsunterstützenden Gases ausmacht, in den Verbrennungsofen einzuspeisen;
> wobei der Vorbehandler für verbrennungsunterstützendes Gas ein Niedertemperatur-Plasmareaktor oder ein Mikrowellenreaktor ist; der Vorbehandler für verbrennungsunterstützendes Gas stromaufwärts des Verbrennungsofens angeordnet ist und durch den zweiten Luftzufuhrkanal mit dem Verbrennungsofen verbunden ist;
> wobei der Vorbehandler für verbrennungsunterstützendes Gas verwendet wird, um Sekundärluft zu aktivieren, die 15 %-30 % der Gesamtmenge des verbrennungsunterstützenden Gases ausmacht;
> wobei der zweite Luftzufuhrkanal angeordnet ist, um die Sekundärluft in ein Zentrum einer Flamme innerhalb des Verbrennungsofens einzuspeisen; und
> wobei der Verbrennungsofen eine Müllverbrennungsanlage, ein Heizkessel, ein Sinterofen, ein Vergaser oder ein Pyrolyseofen ist.

12. System zum Vermindern der Schadstoffkonzentration in durch Verbrennung erzeugtem Rauch nach Anspruch 11, ferner umfassend eine Entsäuerungs- und/oder Entstaubungsvorrichtung, die stromabwärts des Verbrennungsofens gelegen und durch einen Abzug mit dem Verbrennungsofen verbunden ist.

13. System zum Vermindern der Schadstoffkonzentration in durch Verbrennung erzeugtem Rauch nach Anspruch 11, wobei ein Generatormodus des Niedertemperatur-Plasmareaktors Koronaentladung, Impulslichtbogenentladung, Glimmentladung oder dielektrische Sperrschichtentladung ist.

**Revendications**

1. Procédé pour réduire la concentration de polluants dans la fumée générée par combustion, **caractérisé en ce que** :

> le gaz support de combustion est divisé en deux flux, un flux étant de l'air primaire, qui représente 70 % ou plus de la quantité totale du gaz support de combustion, et un autre flux étant de l'air secondaire, qui représente 15 % à 30 % de la quantité totale du gaz support de combustion ;
> l'air primaire est directement introduit dans un four de combustion, et l'air primaire est en contact avec un matériau combustible à l'intérieur du four de combustion, ledit matériau combustible étant choisi parmi l'un ou plusieurs des déchets, du charbon, de la biomasse, du pétrole, des matières volatiles et du gaz combustible ;
> l'air secondaire est soumis à une activation par plasma à basse température ou micro-ondes pour générer des particules chimiquement actives, et ensuite l'air secondaire activé est introduit dans le four de combustion ; et
> l'air secondaire activé est fourni au centre de la flamme de combustion à l'intérieur du four de combustion.

2. Procédé pour réduire la concentration de polluants dans la fumée générée par combustion selon la revendication 1, lesdits polluants étant les NOx, les dioxines et/ou le CO.

3. Procédé pour réduire la concentration de polluants dans la fumée générée par combustion selon la revendication 1, ledit gaz support de combustion étant de l'air, un gaz contenant de l'oxygène ou de l'oxygène.

4. Procédé pour réduire la concentration de polluants dans la fumée générée par combustion selon la revendication 1, ladite température du gaz support de combustion étant comprise entre la température normale et 250°C.

5. Procédé pour réduire la concentration de polluants dans la fumée générée par combustion selon la revendication 1, ledit gaz support de combustion étant un gaz humidifié.

6. Procédé pour réduire la concentration de polluants dans la fumée générée par combustion selon la revendication 1, ladite activation par plasma à basse température étant un processus d'introduction du gaz support de combustion dans un réacteur à plasma à basse température ou un réacteur à micro-ondes pour générer des particules chimiquement actives.

7. Procédé pour réduire la concentration de polluants dans la fumée générée par combustion selon la revendication 1, lesdites particules chimiquement actives étant choisies parmi l'un ou plusieurs des radicaux libres comprenant des atomes O actifs, des atomes H, $O_3$, OH et $HO_2$.

8. Procédé pour réduire la concentration de polluants dans la fumée générée par combustion selon la revendication 6, ledit réacteur à plasma à basse température ou ledit réacteur à micro-ondes étant divisé en une ou deux sections.

9. Procédé pour réduire la concentration de polluants dans la fumée générée par combustion selon la revendication 1, comprenant en outre une étape de purification supplémentaire de la fumée générée par combustion.

10. Procédé pour réduire la concentration de polluants dans la fumée générée par combustion selon la revendication 9, ladite étape de purification supplémentaire étant une étape de désacidification et/ou d'élimination de la poussière.

11. Système destiné à réduire la concentration de polluants dans la fumée générée par combustion, caractérisé en comprenant un dispositif de prétraitement de gaz support de combustion, un four de combustion et des conduits d'alimentation en air,

lesdits conduits d'alimentation en air comprenant un premier conduit d'alimentation en air et un second conduit d'alimentation en air ;
ledit premier conduit d'alimentation en air étant relié au four de combustion, et étant agencé pour introduire de l'air primaire, qui représente 70 % ou plus de la quantité totale de gaz support de combustion, dans le four de combustion ;
ledit dispositif de prétraitement de gaz support de combustion étant un réacteur à plasma à basse température ou un réacteur à micro-ondes ; ledit dispositif de prétraitement de gaz support de combustion étant agencé en amont du four de combustion et étant relié au four de combustion par l'intermédiaire du second conduit d'alimentation en air ;
ledit dispositif de prétraitement de gaz support de combustion étant utilisé pour activer de l'air secondaire qui représente 15 % à 30 % de la quantité totale de gaz support de combustion ;
ledit second conduit d'alimentation en air étant agencé pour introduire de l'air secondaire en un centre d'une flamme à l'intérieur du four de combustion ; et
ledit four de combustion étant un incinérateur, une chaudière, un four de frittage, un gazéifieur ou un four de pyrolyse.

12. Système destiné à réduire la concentration de polluants dans la fumée générée par combustion selon la revendication 11, comprenant en outre un appareil de désacidification et/ou d'élimination de la poussière qui est situé en aval du four de combustion et relié au four de combustion par l'intermédiaire d'un conduit de fumée.

13. Système destiné à réduire la concentration de polluants dans la fumée générée par combustion selon la revendication 11, un mode générateur du réacteur à plasma à basse température étant une décharge corona, une décharge à arc pulsé, une décharge luminescente ou une décharge à barrière diélectrique.

FIG. 1

FIG. 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201611174271
- CN 201710269315X
- US 2004185396 A1
- CN 106196038
- US 2009078228 A1
- US 2003031610 A1